## Europäisches Patentamt
## European Patent Office
## Office européen des brevets

(19)

(11) Veröffentlichungsnummer: **0 052 813**
A2

(12) # EUROPÄISCHE PATENTANMELDUNG

(21) Anmeldenummer: **81109444.0**

(22) Anmeldetag: **30.10.81**

(51) Int. Cl.³: **G 01 N 21/89**

(30) Priorität: **21.11.80 DE 3043849**

(43) Veröffentlichungstag der Anmeldung:
**02.06.82 Patentblatt 82/22**

(84) Benannte Vertragsstaaten:
**AT BE CH FR GB IT LI LU NL SE**

(71) Anmelder: **Koninklijke Textielfabrieken Nijverdal-Ten Cate N.V.**
**Postbox 58**
**NL-7600 GD Almelo(NL)**

(71) Anmelder: **Technisch Bureau A.B.O.F. 1972 B.V.**
**Hogelandseweg 3**
**NL-6545 AC Nijmegen(NL)**

(72) Erfinder: **Hurkmans, Gerardus A.C.M.**
**Kaaplandstraat 9**
**NL-6543 PB Nijmegen(NL)**

(74) Vertreter: **Schulze Horn, Stefan, Dipl.-Ing. et al,**
**Patentanwälte Dipl.-Ing. S. Schulze Horn M.SC. Dr. H. Hoffmeister Goldstrasse 36**
**D-4400 Münster(DE)**

(54) **Verfahren zum Beschauen einer reflektierenden und/oder transparenten, sich bewegenden Bahn und Beschaumaschine zur Durchführung des Verfahrens.**

(57) Verfahren zum Beschauen einer reflektierenden und/oder transparenten, sich bewegenden Bahn (1), insbesondere aus textilem Material, mit die Bahnoberfläche beleuchtenden Lichtquellen (6, 7, 8) mit in Reihe quer zur Bahn angeordneten photoelektrischen Sensoren (20, 21), die in Abstand von der Bahn (1) angeordnet sind und das reflektierte und/oder durchfallende Licht aufnehmen und entsprechend der Intensität des auf sie fallenden Lichtes ein elektrisches Signal erzeugen. Dabei werden dieselben Stellen (x) der sich bewegenden Bahn (1) während des Durchlaufes gleichzeitig oder nacheinander betrachtet werden, wobei die Lichtintensität bei Einhaltung des ersten Blickwinkels von der ersten Reihe optischer Sensoren (20), die Lichtintensität bei Einhaltung des zweiten Blickwinkels von der zweiten Reihe der Sensoren (21) usw. bis zur n-ten Sensorenreihe erfaßt werden. Die Ausgänge der ersten bis (n-1)ten Sensorenreihe sind mit je einem Verschieberegister gekoppelt, in dem eine Sequenz von analogen Signalen einer Sensorenreihe zeitverschieblich gespeichert wird, so daß in einem Vergleichskreis die Signale synoptisch verglichen werden können.

./...

EP 0 052 813 A2

Fig. 1

Verfahren zum Beschauen einer reflektierenden und/oder transparenten, sich bewegenden Bahn und Beschaumaschine zur Durchführung des Verfahrens

Die Erfindung bezieht sich auf ein Verfahren zum Beschauen einer reflektierenden und/oder transparenten, sich bewegenden Bahn, insbesondere aus textilem Material, mit wenigstens einer die Bahnoberfläche beleuchtenden Lichtquelle, mit in Reihe quer zur Bahn angeordneten photoelektrischen Sensoren, die in Abstand von der Bahn angeordnet sind und das reflektierte oder durchfallende Licht aufnehmen und entsprechend der Intensität des auf sie fallenden Lichtes ein elektrisches Signal erzeugen, das verstärkt wird und in ein elektrisches Netzwerk eingespeist wird, welches das Signal anhand von gegebenen Fehlerkriterien verarbeitet.

Aus der Patentliteratur sind zahlreiche Löstungsvorschläge für eine opto-elektronische Untersuchung eines sich bewegenden bahnförmigen Materials bekannt. Insbesondere für die Photo- und Papierindustrie sind Vorrichtungen bekannt, die mit Hilfe eines Scanning-Prinzips die Oberfläche der Bahn laufend abtasten, wobei die sich ergebenden elektrischen Signale der photoelektrischen Sensoren durch ein elektrisches Netzwerk nach bestimmten Kriterien aufgearbeitet werden. Soweit ersichtlich, ist jedoch keine dieser bekannten Vorrichtungen geeignet, bei der Untersuchung von textilem Material eingesetzt zu werden. Die Untersuchungen zeigen, daß textiles Material einen relativ hohen Rauschpegel erzeugt, so daß das Signal-Rausch-Verhältnis nur sehr klein ist und daher sehr schwer analysiert oder bestimmten Fehlerkriterien zugeordnet werden kann. So ist beispielsweise aus der DE-PS 1 917 877 ein Verfahren und eine Vorrichtung der eingangs genannten Art bekannt, bei der sich quer über die Bahnbreite eine Reihe von photoelektrischen Wandlern erstreckt, die von der Materialbahn reflektiertes Licht aufnehmen. Die Lichtquelle ist dabei neben dem Rand der Materialbahn angeordnet, so daß sie einen schmalen Lichtstrahl quer zur Bahnbreite und parallel zur Bahnoberfläche zwischen dieser und der Wandlerreihe ausstrahlt. Diese Vorrichtung kann zwar neben Löchern und groben Oberflächenfe. 'ern auch erhabene Fehler ermitteln; es bleibt jedoch das Problem, daß diese Vorrichtung ein für textile Materialien zu niedriges Signal-Rausch-Verhältnis entwickelt, so daß die Verwendung des bekannten Verfahrens bzw. der bekannten Vorrichtung sich als unmöglich erweist.

Es stellt sich damit die Aufgabe, ein Verfahren zum Beschauen einer sich bewegenden Bahn zu finden, das vom Prinzip her ein hohes Signal-Rausch-Verhältnis ermöglicht, so daß eine sichere Fehlerfeststellung nicht nur dem Vorhanden-sein nach, sondern auch nach Art der Fehler (beispielsweise Fadenverdünnung oder -verdichtung) möglich ist. DAbei soll das Verfahren sich zwar elektronischer Mittel bedienen; die Fehlerauffindung und die Erhöhung des Signal-Rausch-Verhältnisses sollen aber nicht allein auf einer elektronischen Rauschunterdrückung beruhen.

Diese Aufgaben werden für ein Verfahren der eingangs genannten Art gelöst, bei dem dieselben Stellen der sich bewegenden Bahn während des Durchlaufens gleichzeitig oder nacheinander unter verschiedenen Blickwinkeln betrachtet werden, wobei die beobachtete Lichtintensität bei Einhaltung des ersten Blickwinkels von einer ersten Reihe optischer Sensoren, die Lichtintensität bei Einhaltung des zweiten Blickwinkels von einer zweiten Reihe Sensoren usw. bis zur n-ten Sensorenreihe erfaßt werden. Bei der Verfahrensvariante, bei der dieselben Stellen der sich bewegenden Bahn während des Durchlaufens nacheinander betrachtet werden, werden die Ausgänge der ersten bis (n-1)-ten Sensorenreihe mit je einem Verschieberegister gekoppelt, in dem eine Sequenz von analogen Signalen einer Sensorenreihe zeitverschieblich gespeichert wird, so daß in einem Vergleichskreis, dem alle Sensorenreihen ihre Signale zuführen, diese Signale synoptisch vergleichbar sind. Jedes Signal wird demnach als "Grauwert" ermittelt, also nicht nur als ein Hell-Dunkel-Raster verarbeitet.

Bei dem Verfahren gemäß Erfindung ist neu, daß bei entsprechender Abstimmung von Geschwindigkeit der Bahn und Taktzeit der optischen Aufnahmefolge ein sehr dichtes Raster von Untersuchungspunkten auf der Bahn erzeugt werden kann, wobei dieselbe Stelle jeweils unter mehreren Blickwinkeln betrachtet wird. Bei aufeinanderfolgender Betrachtung sorgen Analog-Schieberegister dafür, daß die Signalsequenzen während des Vorrückens der Bahn zum nächsten Untersuchungspunkt zur Verfügung stehen, so daß die entsprechenden Signal-Additions- oder Subtraktionsvorgänge in der zur Verfügung stehenden Zeit durchgeführt werden können.

Dieses Verfahren unterscheidet sich auch wesentlich von dem bekannten Signal-Additionsverfahren, die zur Erhöhung des Signal-Rausch-Verhältnisses eine Addition verschiedener Meßdurchläufe vornehmen und mit einem Referenzwert vergleichen. Durch die Betrachtung unter verschiedenen Blickwinkeln, insbesondere bei Messung des durchfallenden Lichtes, ergeben sich ausgezeichnete Signalpegel, die es, wie die Erfahrung erweist, erlauben, insbesondere textiles Material nicht nur nach dem Vorhandensein der Fehler, sondern auch nach Fehlerarten zu untersuchen. Daraus folgt, daß Materialien, bei denen von der Oberflächenbeschaffenheit her das Signal-Rausch-Verhältnis größer ist, selbstverständlich auch untersucht werden können. Als Beispiele seien genannt: Papierbahnen mit Löchern oder Verschmutzungen, Walzbleche, unbelichtete Filme und dergleichen.

Neben der Untersuchung des durchfallenden Lichtes ist es auch möglich, durch entsprechende Veränderung der optischen Anordnung reflektiertes Licht zu untersuchen. Das Verfahren ist dabei in seinen Grundzügen gleich. Hierbei kann von einer Anordnung ausgegangen werden, bei der eine Lichtquelle oberhalb des zu untersuchenden Materials angeordnet ist und beispielsweise durch Spiegel mehrere Lichtbündel erzeugt werden. Dieselbe Stelle des Materials kann folglich gleichzeitig auch unter Reflektions- und Transparenzbedingungen untersucht werden.

Ein weiterer, überraschender Vorteil des vorliegenden Verfahrens ist, daß jeder der den einzelnen Blickwinkeln zugeordneten Lichtbündeln in seiner spektralen Zusammensetzung abgewandelt oder in seiner Schwingungsebene (Polarisationsebene) geändert und untersucht werden kann. Dies kann beispielsweise durch Auswahl verschiedener Lampen mit verschiedenen Spektren, insbesondere Gasentladungslampen, geschehen. Es ist auch möglich, Polarisations- und Farbfilter in den Strahlengang einzusetzen.

Geschwindigkeit und Längenkoordinaten der durchlaufenden Bahn werden mittels einer Fotodisk erfaßt, welche mit Der Bahn am Rande angetrieben rotiert und die abgelaufene Länge und/oder Geschwindigkeit der Bahn erfaßt, wobei durch Anzahl der abgegebenen Impulse pro Zeiteinheit sehr genau die abgelaufene Bahnlänge oder die Geschwindigkeit der Bahn erfaßt wird. Bei einer Fotodisk handelt es sich um einen bekannten Analog-Digital-Wandler, der den Umdrehungswinkel einer in ihrer Umfangslänge bekannten Walze digital erfaßt, wobei die Zahl der abgegebenen Impulse ein Maß für Weg und Geschwindigkeit ergeben. Die Frequenz der von der Fotodisk ausgehenden Impulsfolge kann weiterhin dazu verwendet werden, die Intensität der die Bahnoberfläche beleuchtenden Lichtquellen zu steuern. Es ist evident, daß bei hoher Bahngeschwindigkeit eine entsprechend höhere Lichtintensität zur Verfügung stehen muß, um ausreichend große Signale zu erzeugen.

Für die Auswertung der Signale ist ein den photoelektrischen Sensoren nachgeschalteter Diskriminatorkreis erforderlich. Insbesondere zur Untersuchung von Textilien auf Fehlstellen, wie Fadenverdichtungen und -verdünnungen, wird die Signalsequenz der ersten Sensorenreihe synoptisch den Signalen der zweiten Sensorenreihe zuaddiert, wobei sich ein erstes Additionssignal ergibt, wird die Signalsequenz der zweiten Sensorenreihe synoptisch dem ersten Additionssignal zuaddiert, wobei sich ein zweites Additionssignal ergibt, wird die Signalsequenz der dritten Sensorenreihe synoptisch dem zweiten Additionssignal zuaddiert, so daß sich ein drittes Additionssignal ergibt, usw., und wird das n-te Additionssignal, d. h. das gemeinsame Videosignal daraufhin untersucht, ob es bestimmten Fehlerkriterien genügt. Unter "Addition" soll auch eine Addition mit negativem Vorzeichen verstanden werden. Dies gilt insbesondere für den Fall, daß Signale sowohl aus Tranzparenz- als auch aus Reflektionsvorgängen stammen. Eine Fadenverdünnung beispielsweise ergibt ein starkes Signal bei Transparenz, dagegen ein schwaches bei Reflektion. Werden bei einem Meßvorgang daher in diesem Sinne "gemischte" Signale verarbeitet, so müssen diese voneinander subtrahiert werden.

Die Gestalt und Amplitude des Videosignals unterscheiden sich charakteristisch dann, wenn Abweichungen von einer gegebenen Normalverteilung gegeben sind. Die Abweichungen können beispielsweise durch Inaugenscheinnahme des erzeugten Videosignals untersucht werden. Ein elektronisches Auswerteverfahren ist beispielsweise in der DE-AS 2 621 109 beschrieben.

Die Beschauvorrichtung zur Durchführung des Verfahrens besitzt wenigstens zwei Reihen von photoelektrischen Sensoren, die in Bahnlaufrichtung hintereinander angeordnet sind. Mit Hilfe einer optischen Anordnung wird durchfallendes oder reflektiertes Licht zweier verschiedener, eventuell weiterer, gleichzeitig oder nacheinander durchlaufener Stellen mit der sich bewegenden Bahn gebündelt auf die lichtempfindliche Fläche mehrerer Sensorenreihen geworfen. Wenn auch grundsätzlich angestrebt wird, nur wenige photoelektrische Sensoren quer zur Bahn anzuordnen, so ist doch wegen des Erfordernisses einer erhöhten Informations- und Überwachungsdichte erforderlich, daß entsprechend viele Sensoren vorhanden sind. Je geringer die Zahl der Sensoren auf einer bestimmten Breite, um so ungenauer ist die Auflösung.

Es wird weiterhin vorgeschlagen, daß n (vorzugsweise ist n = 1 bis 3) stabförmige Lichtquellen in paralleler Anordnung in Laufrichtung hintereinander unterhalb und/oder oberhalb der bewegten Bahn angeordnet sind, und daß die von den n Lampen ausgehenden, durch die Bahn fallenden oder von ihr reflektierten n Lichtbündel jeweils, z. B. durch eine Sammellinse, auf die zugeordneten n Sensorenreihen fokussiert werden. Dabei wird vorzugsweise je eine Sensorenreihe durch einen Photodioden-Linienscanner mit hoher Verdichtung der photoelektrischen Sensoren gebildet. Derartige Linienscanner werden beispielsweise von der Firma Reticon Corporation, Mountain View, USA, vertrieben. Die Reticon-Linienscanner besitzen eine Photodioden-Anordnung, bei der beispielsweise 1.024 Elemente mit jeweils 1/1000 Zoll Abstand
(0,0254 mm) auf einem Band angeordnet sind. Bei Verwendung einer entsprechenden fokussierenden Optik kann
eine Beobachtungsbreite von ca. 5 - 15 cm auf einen
solchen Linienscanner gebracht und ausgewertet werden.

Zur Erfassung großer Bahnbreiten werden über die Bahnbreite mehrere Sensorenreihen-Gruppen nebeneinander angeornet, denen jeweils getrennte optische Fokussierungssysteme zugeordnet sind.

Weitere Eigenschaften und Merkmale ergeben sich aus der
nachfolgenden Beschreibung einiger ausgewählter Ausführungsbeispiele, die in der Zeichnung dargestellt
sind. Die Figuren der Zeichnung zeigen:

Figur 1 in schematischer Darstellung die Meßanordnung
mit dem nachgeschalteten Verschieberegister-
Additionskreis;

Figur 2 eine Textilanordnung (Gewebe) und das sich
daraus ergebende gemeinsame Videosignal;

Figur 3 einen Schnitt durch einen Meßkopf mit Objektiv;

Figuren 4a bis 4e verschiedene andere Meßanordnungen
in schematischer Darstellung;

Figuren 5a, b eine Anordnung der Intensitätssteuerung;

Figur 6 eine Anordnung ähnlich wie in Figur 1, jedoch
mit einem Referenzobjektiv und -muster.

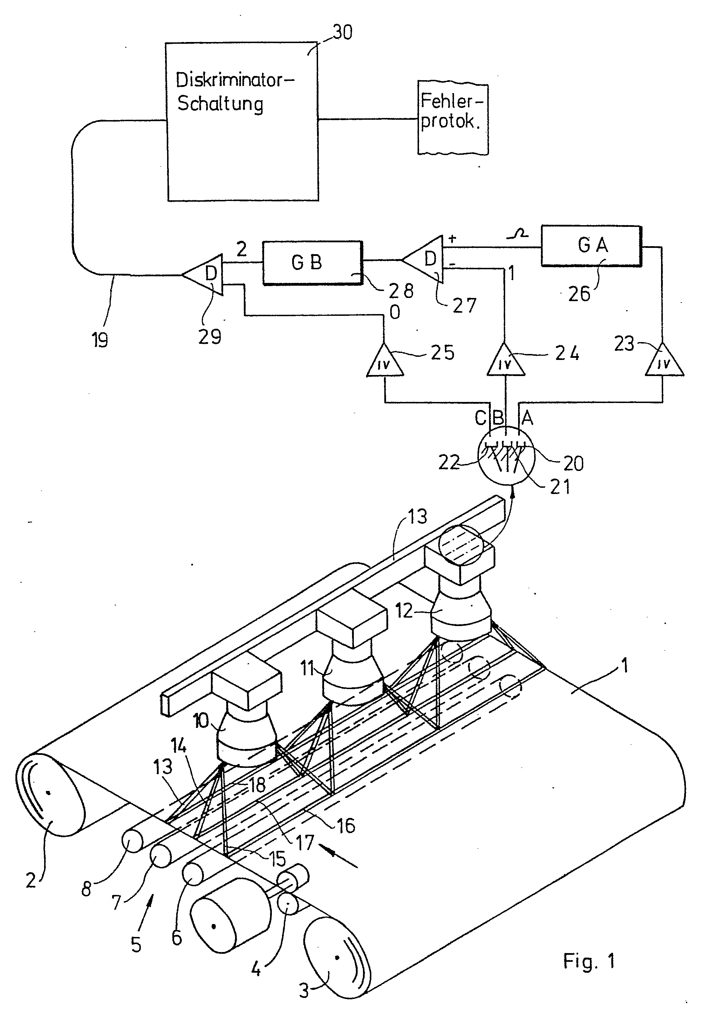

In Figur 1 ist schematisch eine Vorrichtung zum Feststellen von Fehlern in einer ersten Ausführungsform dargestellt. Eine zu überwachende Textilbahn 1, die in Richtung des Pfeils mit Hilfe eines Rollenantriebes 2 von einer Vorratsrolle 3 abgezogen wird, passiert zunächst eine Registriereinheit (Photodisk) 4. Die Photodisk hat die Aufgabe, mit einer Reibrolle die Bahnposition (abgelaufene Länge) und indirekt die Bahngeschwindigkeit festzustellen, so daß sowohl die Linienkoordinate als auch die Geschwindigkeit festlegbar sind. Anschließend überläuft die Bahn eine Lampenstation 5, die im wesentlichen aus drei, über die gesamte Bahnbreite parallel ausgerichteten, in Längsrichtung hintereinander angeordneten Glühwendellampen 6, 7, 8 besteht. Die Lampen sind beispielsweise bekannte 60 W-Gleichstrom-Drahtwendellampen, die einen Lichtstrom erzeugen, von dem ein ausreichender Teil durch die teiltransparente Textilbahn im Bereich des zu untersuchenden Abschnittes x hindurchtritt. Entsprechend der Qualität und Dichte des zu untersuchenden Textilmaterials müssen eventuell die Lampen variiert werden. Wesentlich ist, daß die Lampen einen konstanten Lichtstrom abgeben. Übliche Leuchtstofflampen mit Edelgasfüllung, die im Wechselstrombetrieb arbeiten, sind deshalb nicht geeignet.

Der Abstand der Lampen untereinander, gemessen als Abstand der einander zugewandten Seitenflächen, liegt bei etwa 3 cm. Der Abstand von der Bahnebene liegt bei etwa 2 cm; er sollte zur Erhöhung der Lichtausbeute möglichst gering sein. Oberhalb der Lampen sind (nicht dargestellte) Schlitzblenden angeordnet, die jeweils ein schmales Lichtbündel 16 - 18 erzeugen. Außerdem können Grau-, Polarisations- und/oder Farbfilter in die Lichtbündel vor oder hinter der Bahn eingebaut sein.

Über die Bahn im Bereiche der Lampenanordnung 5 sind drei fokussierende Objektive 10, 11, 12 über die Bahnbreite verteilt angeordnet, so daß jedes der Objektive aufgrund seiner Brennweite einen Teil der Lichtbündel 16 - 18 erfaßt und fokussiert, die von je einer der Lampen 6 - 7 ausgehen. Dabei wird von der mittleren Lampe 7 in erster Linie das direkte, von den anderen Lampen jedoch das an der Textilbahn gestreute Licht erfaßt. Meßtechnisch bedeutsam ist, daß bei der gewählten Meßmethode, die mit Streulicht arbeitet, eine Reflektion innerhalb der Textilbahn auftreten kann, z. B. an fehlerhaften Fäden oder an sich in der Bahn befindlichen Fremdkörpern, so daß diese Fehler besonders gut erfaßt werden. Durch das Durchlaufen dreier verschiedener Blickwinkel wird im allgemeinen jede als Fehler zu definierende Veränderung erfaßt.

Die fokussierten Abbildungen der Bahnbereiche werden auf je einen 1.024 Bit-Photodioden-Linienscanner 20, 21, 22 projiziert. Die drei jedem Objektiv zugeordneten Linienscanner haben einen Sensorteil von 25,4 mm (1 Zoll) Länge, auf dem 1.024 durch ein Quarzfenster abgeschirmte, elektrisch voneinander getrennte Photodioden nebeneinander in einer Linie angeordnet sind. Derartige Linienscanner sind an sich bekannt (z. B. RETICON RL 1.024 B). Teilt man, wie im Ausführungsbeispiel vorgeschlagen, daher die gesamte Breite der Textilbahn in drei Überwachungsbereiche auf, so sind bei einer gewissen Überlappung jeder Lampe ca. 3.000 Meßpunkte zugeordnet. Jedes einzelne Photodiodensignal gibt daher einen relativ eng begrenzten Bereich wieder. Beispielsweise werden Meßanordnungen gewählt, so daß eine Bahnbreite von 1 mm von 10 Photodioden (Meßpunkten) erfaßt wird. Die maximale spektrale Empfindlichkeit derartiger Linienscanner liegt im Bereich von 6.000 - 800 nm.

Das Video-Ausgangssignal des Linienscanners ist eine Impulsfolge von 1.024 Ladungen, die von einem Videoausgang abgerufen werden. Da die Ausgangssignale nur als kapazitive Ladungen abgerufen werden können, wird jedem Linienscanner 20, 21, 22 je ein Vorverstärker 23, 24, 25 nachgeschaltet. Die Ausgänge der Vorverstärker 23 - 25 sind wie folgt verbunden: Ausgang des Vorverstärkers 23 mit dem Eingang eines ersten Schieberegisters 26, dessen Ausgang mit dem Eingang eines ersten Differenzverstärkers verbunden ist; der Ausgang des Vorverstärkers 24 ist mit dem Eingang des ersten Differenzverstärkers 27 verbunden; der Ausgang des Vorverstärkers 25 ist mit dem Eingang eines zweiten Differenzverstärkers 29 verbunden; der Ausgang des Differenzverstärkers 27 ist an den Eingäng eines Schieberegisters 28 angeschlossen, dessen Ausgang mit dem Eingang des zweiten Differenzverstärkers 29 verbunden ist. Das Ausgangssignal des Differenzverstärkers 29 ist über eine Verbindungsleitung 19 mit einem Diskriminatorkreis für das Videosignal verbunden. Am Ausgang des zweiten Differenzverstärkers 29 entsteht nämlich ein "gemeinsames Videosignal", dessen elektronische Analyse durch einen Diskriminatorkreis 30 durchgeführt wird. Statt die Vorverstärker-Ausgänge direkt zu schalten, können die Signale auch über Inverter 23', 24', 25' geleitet werden, die jeweils die negative Signalspannung erzeugen. Über Wahlschalter 23", 24", 25" können demnach auch die Signale der Linienscanner subtrahiert werden.

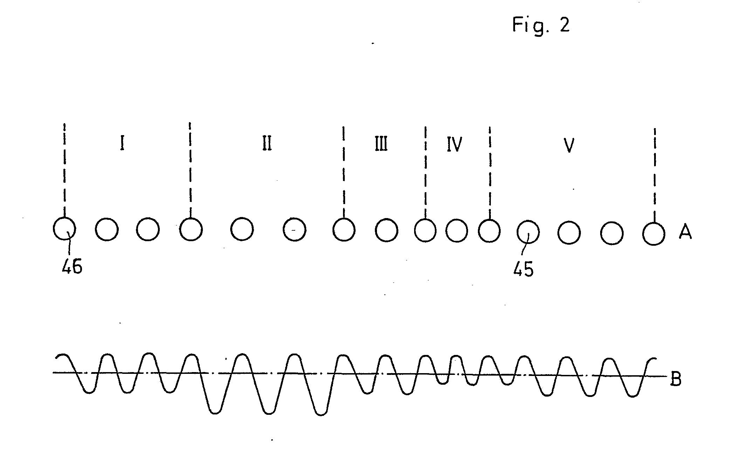

Figur 2 zeigt eine Signalfolge, die sich bei Überwachung eines textilen Materials, beispielsweise eines Nesselgewebes ergibt. Die Betrachtung erfolgt anhand einer schematisierten Intensitätskurve. Bei A ist eine Reihe von Kettfäden 45 des Nesselgewebes dargestellt, die nacheinander als Videosignal erscheinen. Dabei ist davon ausgegangen, daß das zugehörige addierte, synoptisch betrachtete Videosignal dreier, einer bestimmten Linie zugeordneten Photodioden (Sensoren) durch eine Kurve B wiedergegeben wird, die durch entsprechenden Abgriff erzielt wird. Die Kettstruktur gemäß A ist in fünf Zonen unterteilt. Die Zonen 1, 3 und 5 enthalten normale Abstände der Kettfäden, während die Zone 2 eine Verdünnung und die Zone 4 eine Verdichtung darstellen.

Bei einer einzigen Betrachtungsart, z. B. nur Reflektion- oder nur Transparenzmessungen, werden die ankommenden Signale synoptisch addiert. Bei Verwendung von Invertern 23', 24' bzw. 25' oder eines Schieberegisters, bei dem Vorzeichenumkehr eintritt (z. B. Typ Fairchild, CCD 32 A) sind daher die Signale jeweils nochmals in ihrem Vorzeichen zu ändern. Das bedeutet, daß die von einer bestimmten Stelle der Bahn herrührenden Signale addiert werden. Werden gemischt erzeugte Signale betrachtet, also beispielsweise ein durch Reflektion und zwei durch Transparenz erzeugte Signale, so sind die Signale einer bestimmten Art jeweils mit dem Vorzeichen + bzw. das der anderen Art mit dem Vorzeichen - zu versehen.

Die eigentliche Verarbeitung der Signale kann durch Inaugenscheinnahme oder durch bekannte Diskriminatorkreise erfolgen. Dabei ist zu berücksichtigen, daß sowohl die Amplitude als auch der sich durch Integration ergebende Wert der Kurve gemäß Figur 2 B charakteristische Unterschiede zeigt. Bei einer Fadenverdünnung (Zone 2) ist die Lichtintensität und damit das Integral größer, bei einer Fadenverdichtung ergibt sich ein entsprechend kleineres, im Integrationswert geringeres, Signal (Zonen 3, 4).

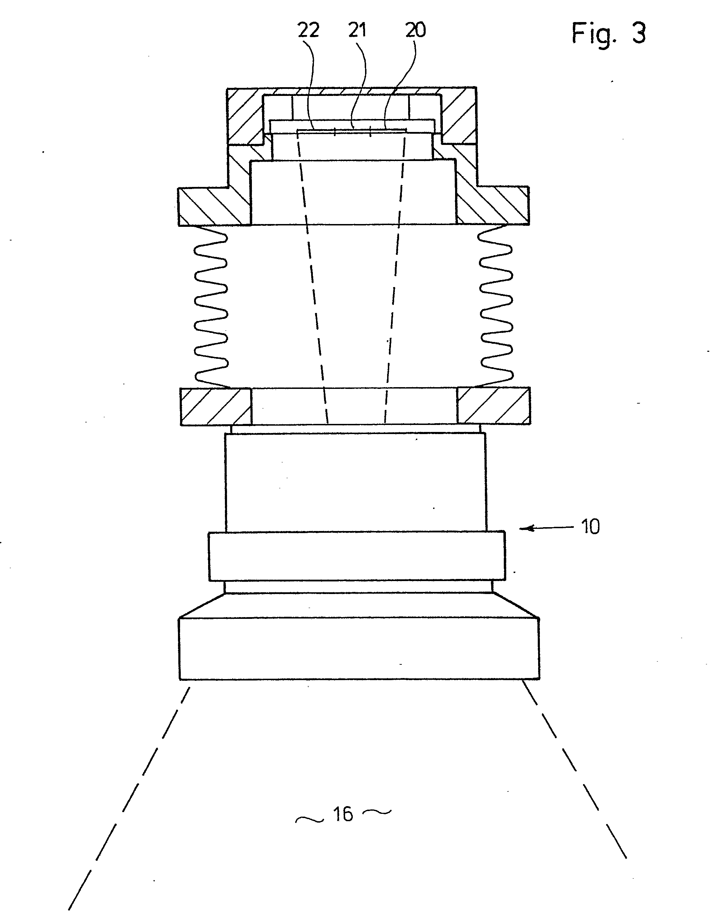

Figur 3 zeigt Details der optischen Anordnung, teilweise geschnitten. Ein Lichtbündel 16 fällt in ein an sich bekanntes Weitwinkelobjektiv 10 ein, beispielsweise ein 11-Linsen-Objektiv, das im Handel käuflich erhältlich ist. Das Lichtbündel wird fokussiert und scharf eingestellt auf die Ebene der Linienscanner 20 - 22, die im Fokalbereich des Objektives im Inneren einer Kappe angeordnet sind. Die Objektive sind an einer Befestigungsleiste 13 angebracht.

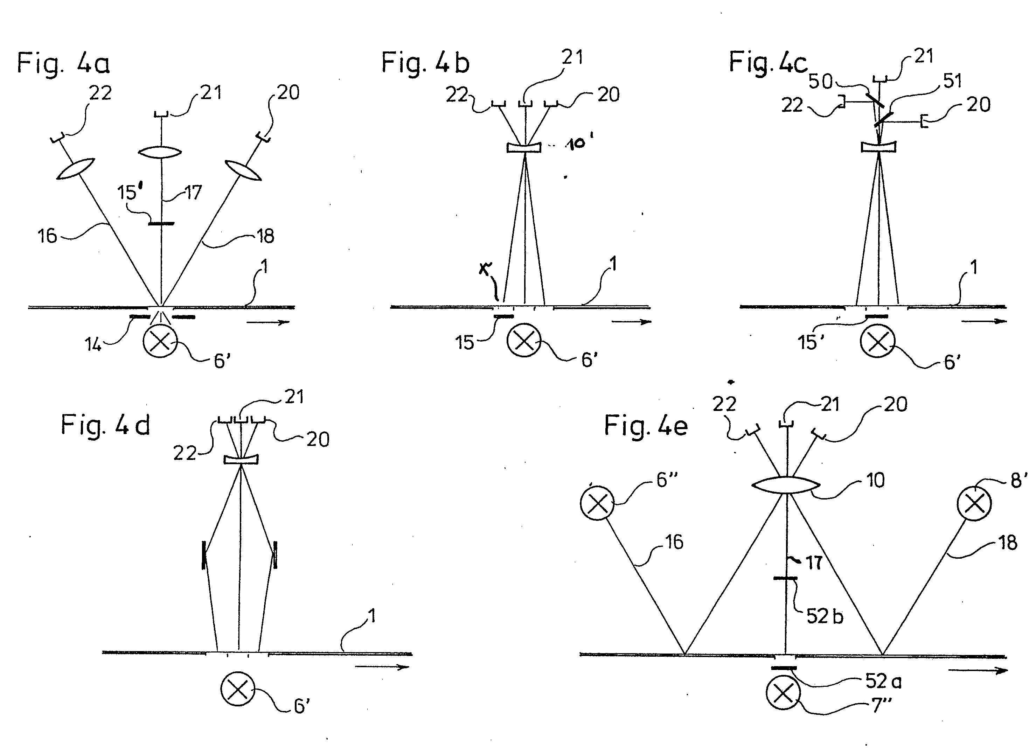

Die Figuren 4 a bis 4 e zeigen schematisch weitere Anordnungen der Photodioden-Linienscanner in Bezug auf die sich bewegende Bahn 1 und Lampen. Dabei ist die mechanische Vortriebsvorrichtung für die Bahn 1 jeweils ähnlich wie in Figur 1 dargestellt.

Figur 4a zeigt den Fall, daß von einer einzigen Lampe 6' ein Teil der Bahnfläche beleuchtet wird, auf die ein Lichtbündel fällt, das durch die Schlitzblende 14 begrenzt ist. Dieses Lichtbündel erzeugt wiederum drei zu betrachtende Lichtbündel 16, 17, 18, von denen 16 und 18 Streulicht beinhalten, während das Bündel 17 das direkt durchgestrahlte Licht enthält. Entsprechend ist das Bündel 17 mit einem Graufilter 15' gedämpft. Mit Hilfe der Linienscanner 20, 21, 22 werden die Intensitätssignale des auf sie fallenden Lichtes aufgenommen und einem Verstärker- und Additionskreis zugeführt, wie dies aus Figur 1 ersichtlich ist. Allerdings sind dabei die Verschieberegister nicht erforderlich, da alle Signale gleichzeitig anfallen.

Figur 4b zeigt eine Variante, bei der ein Teilbereich x der Bahn 1 nacheinander die von einer einzigen Lampe 6' ausgeleuchteten Meßbereiche durchläuft. Das von diesem Meßbereich ausgehende Licht wird durch eine Streulinse 10' erfaßt und den Linienscannern 20 - 22 zugeführt. Im vorliegenden Falle ist vor den zuerst erreichten Bereich ein Farbfilter 15 geschaltet. Mit derartigen Farbfiltern lassen sich beispielsweise Farbabweichungen leichter erfassen.

Figur 4c arbeitet in einer ähnlichen Anordnung wie Figur 4b, jedoch ist keine Streulinse vorhanden, sondern ein System von halbdurchlässigen Spiegeln 50, 51, an denen das Licht jeweils teilweise reflektiert wird und entsprechend angeordneten Linienscannern 20 - 22 zugeführt wird. Im vorliegenden Falle ist dem mittleren Lichtstrahlbündel ein Graufilter 15' vorgeschaltet.

Figur 4d zeigt eine Anordnung, bei der seitlich angebrachte Spiegel die von einer einzigen Lampe 6' ausgehenden Lichtbündel reflektieren, die dann mit Hilfe einer Streulinsen-Optik auf die Linienscanner 20 - 22 fokussiert werden.

Figur 4e stellt eine Anordnung dar, bei der teilweise hindurchtretendes Licht (Bündel 17) und teilweise reflektierendes Licht (Bündel 16, 18) verwendet wird. Mit Hilfe der unterhalb der Bahn angeordneten Lampe 7" wird ein direkt durch die Bahn hindurchtretendes Bündel 17 erzeugt, in dessen Laufbahn zwei Polarisationsfilter 52 a und 52 b gestellt sind, daß die Polarisationsebenen senkrecht zueinander stehen. Mit Hilfe dieser Polarisationsfilter 52 a, b lassen sich demnach Lichtdrehungen während des Durchtretens durch die Textilbahn 1 beobachten. Das reflektierende Licht der Bündel 16, 18 kann selbstverständlich ebenfalls durch Polarisationsfilter geschickt werden; wie aus der Optik bekannt ist, wird gespiegeltes Licht polarisiert, so daß Abweichungen durch Polarisationsfilter sichtbar werden. Mit Hilfe einer Sammellinse 10 werden die Lichtbündel auf die Linienscanner 20, 21, 22 fokussiert.

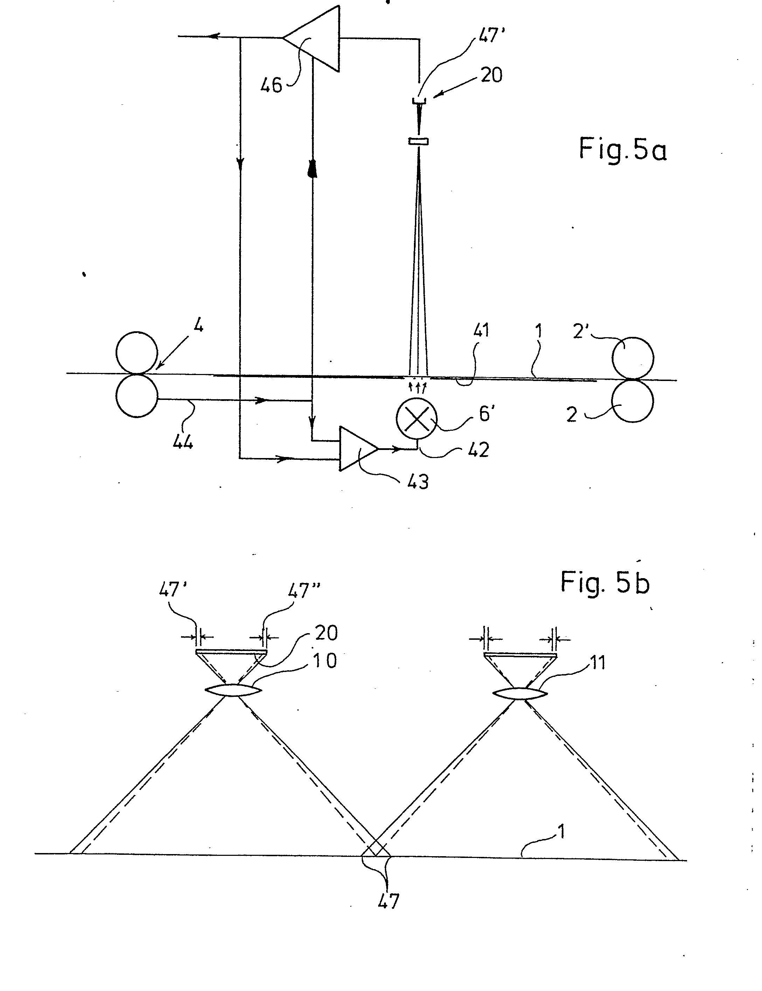

Die Figuren 5a und 5b betreffen Anordnungen zur Steuerung der Lichtintensität einer Lampe 6'. Durch die beiden Antriebsrollen 2, 2' wird die Textilbahn 1 unter der Meßanordnung durchgezogen. Dabei treibt die Textilbahn die Photodisk 4 an, die, wie bereits erläutert, die Längenkoordinaten und die Geschwindigkeit des Materials meßbar macht. Die Photodisk ermöglicht es damit, daß auf eine Kennzeichnung des Materials beispielsweise mit Magnetflecken oder dergleichen völlig verzichtet werden kann.

Die mit x bezeichnete Stelle des Materials gelangt über eine Glasplatte 41, unter der die Lampe 6' angeordnet ist. Die Lampe 6' kann in ihrem Lichtstrom durch eine an sich bekannte Schaltung verändert werden. Hierzu ist an der Leitung 42 von einem Verstärker 43 kommend eingezeichnet. Der Lichtstrom der Lampe wird dabei im wesentlichen gesteuert durch die von der Photodisk 4 festgestellte Bandgeschwindigkeit. Hierzu ist eine Leitung 44 von der Photodisk vorgesehen.

Die durch die Bahn 1 tretenden Lichtstrahlen werden gebündelt auf die Sensoren des Linienscanners 20 geworfen. Wie aus Figur 5b erkennbar ist, sind quer über die Bahn 1 zwei Meßbereiche mit den zugehörigen Objektiven 10, 11 angeordnet. Diese Meßbereiche dürfen sich an ihren Rändern nicht überlappen. Diese genaue Aneinanderreihung ist aber mechanisch sehr schwer zu bewerkstelligen, da es nur um Bruchteile von mm geht. Es wird daher ein überlappender Bereich 47 in Kauf genommen. Um aber trotzdem einen "nahtlosen" Anschluß der Meßbereiche zu erreichen, werden Sensoren, die ein Lichtsignal desselben Meßbereiches erhalten, jedoch verschiedenen Linienscannern angehören, jeweils so geschaltet, daß jede Stelle nur einmal berücksichtigt wird. Dadurch ergeben sich im Linienscanner 20 Randbereiche, die "abgeschaltete" Sensoren umfassen. Diese Bereiche sind mit 47', 47" gekennzeichnet. Da die Signale von diesen Sensoren nicht addiert werden, können sie dazu dienen, auf ihre Intensität überprüft zu werden. Sobald sie eine mittlere, festgelegte Sollintensität über- oder unterschreiten, kann über einen Vorverstärker 46 und einen nachgeschalteten Intensitätsverstärker 43 die Intensität der Lampe 6' ebenfalls verändert werden. Durch den mit zwei Eingängen versehenen Verstärker 43 können damit beide Einflußgrößen, nämlich Bahngeschwindigkeit und natürliche Dicke oder natürlicher Lichtverlust berücksichtigt werden. Da jeder Lampe ein bestimmter Linienscanner

15

zugeordnet ist, kann jede Lampe, beispielsweise bei der Ausführungsform gemäß Figur 1, einzeln gesteuert werden.

Insgesamt ergeben sich durch das Verfahren und die zugehörige Vorrichtung überraschende Möglichkeiten, bisher nicht bekannte Auflösungen für bestimmte Textil-Fehler zu ermöglichen.

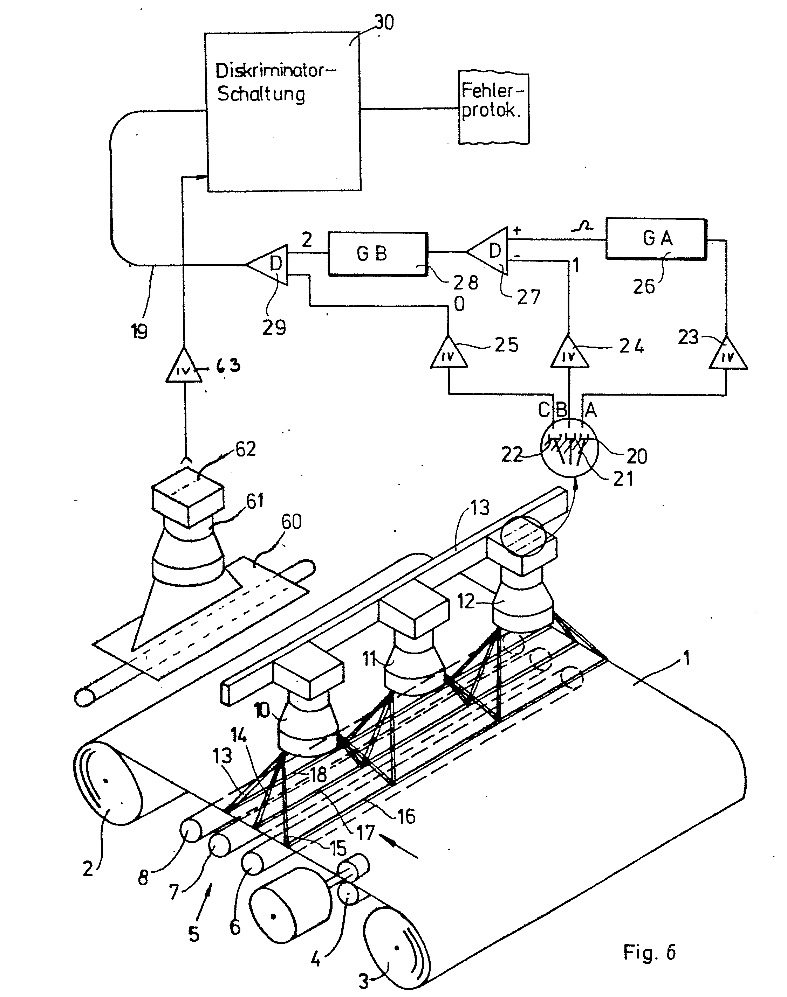

Eine weitere Verfahrensvariante (vgl. Figur 6) besteht in der Möglichkeit, eine stillstehende oder mitlaufende Referenzmaterialbahn 60 unter einem speziell dafür angeordneten Objektiv 61 mit Linienscanner 62 zu messen. Die Signale laufen über einen Vorverstärker 63 in den Diskriminatorschaltkreis 30 ein. Das Signal kann beispielsweise dazu dienen, dem gemeinsamen Videosignal als Vergleichssignal zu dienen, so daß auch Textilien mit Mustern untersucht werden können. Das zusätzliche Objektiv mit Muster kann auch dazu dienen, ein Referenzsignal zur Kompensation eventueller optischer Abweichungen und Fehler im optischen System zu erzeugen.

Patentansprüche:

1. Verfahren zum Beschauen einer reflektierenden und/ oder transparenten, sich bewegenden Bahn, insbesondere aus textilem Material, mit wenigstens einer die Bahnoberfläche beleuchtenden Lichtquelle, mit in Reihe quer zur Bahn angeordneten photoelektrischen Sensoren, die in Abstand von der Bahn angeordnet sind und das reflektierte und/oder durchfallende Licht aufnehmen und entsprechend der Intensität des auf sie fallenden Lichtes ein elektrisches Signal erzeugen, das verstärkt wird und in ein elektrisches Netzwerk eingespeist wird, welches das Signal anhand von gegebenen Fehlerkriterien verarbeitet,

dadurch gekennzeichnet, daß

dieselben Stellen (x) der sich bewegenden Bahn (1) während des Durchlaufes gleichzeitig oder nacheinander unter verschiedenen Blickwinkeln betrachtet werden, wobei die beobachtete Lichtintensität bei Einhaltung des ersten Blickwinkels von der ersten Reihe optischer Sensoren (20), die Lichtintensität bei Einhaltung des zweiten Blickwinkels von der zweiten Reihe der Sensoren (21) usw. bis zur n-ten Sensorenreihe erfaßt werden, und daß bei aufeinanderfolgender Betrachtung die Ausgänge der ersten bis (n-1)ten Sensorenreihe mit je einem Verschieberegister gekoppelt sind, in dem eine Sequenz von analogen Signalen einer Sensorenreihe zeitverschieblich gespeichert wird, so daß in einem Vergleichskreis, dem alle Sensorenreihen ihre Signale zuführen, die Signale synoptisch verglichen werden können.

2. Verfahren nach Anspruch 1, dadurch gekennzeichnet, daß die den einzelnen Blickwinkel zugeordneten Lichtbündel (13, 14, 15) in ihrer spektralen Zusammensetzung verschieden sind.

3. Verfahren nach Anspruch 1, dadurch gekennzeichnet, daß die Längenkoordinaten und die Geschwindigkeit der durchlaufenden Bahn (1) mittels einer Photodisk (4) erfaßt werden, die auch als Taktgeber für die Verschieberegister dient.

4. Verfahren nach Anspruch 3, dadurch gekennzeichnet, daß die Photodisk (4) die Intensität der die Bahnoberfläche beleuchtenden Lichtquelle(n) steuert.

5. Verfahren nach Anspruch 1, dadurch gekennzeichnet, daß insbesondere zur Untersuchung von Textilien auf Fehlstellen wie Fadenverdichtungen, -verdünnungen und Flecken bei Betrachtung des bahnförmigen Materials die Signalsequenz der ersten Sensorreihe synoptisch den Signalen der zweiten Sensorenreihe zuaddiert werden, wobei sich ein erstes Additionssignal ergibt, die Signalsequenz der ersten Sensorenreihe synoptisch den Signalen der zweiten Sensorenreihe zuaddiert wird, wobei sich ein erstes Additionssignal ergibt, die Signalsequenz der zweiten Sensorenreihe synoptisch dem ersten Additionssignal zuaddiert wird und ein zweites Additionssignal ergibt, die Signalsequenz der dritten Sensorenreihe synoptisch dem zweiten Additionssignal zuaddiert wird, und ein drittes Additionssignal, d. h. das gemeinsame Videosignal, original und/oder invertiert einem oder mehreren Differenzverstärkern eingegeben wird, die alle Signalspannungswerte oberhalb eines festgelegten Spannungswertes integrieren, wobei der Gestalt und Amplitude des integrierten Spannungswertes ein Kriterium für die Art der Fehlstellen ist.

6. Verfahren nach Anspruch 1, dadurch gekennzeichnet, daß einzelne photoelektrische Sensoren (47) nicht zur Fehlererkennung, sondern zur Erzeugung eines Referenzsignals zur Steuerung der Lichtintensität der Lichtquelle(n) (6, 7, 8) geschaltet sind.

7. Beschauvorrichtung zur Durchführung des Verfahrens nach Anspruch 1, dadurch gekennzeichnet, daß wenigstens zwei Reihen von photoelektrischen Sensoren in Bahnlaufrichtung hintereinander angeordnet sind, und daß mit Hilfe einer optischen Anordnung durchfallendes oder reflektierendes Licht zweier verschiedener, nacheinander durchlaufender Stellen der sich bewegenden Bahn gebündelt auf die lichtempfindliche Fläche der Sensoren geworfen wird.

8. Vorrichtung nach Anspruch 7, dadurch gekennzeichnet, daß (n), vorzugsweise drei, stabförmige Lichtquellen (6, 7, 8) in paralleler Anordnung in Laufrichtung hintereinander unterhalb der bewegten Bahn angeordnet sind und daß die von den (n) Lampen ausgehenden, durch die Bahn fallenden (n) Lichtbündel jeweils durch eine Sammellinse auf die zugeordneten (n) Sensoren fokussiert sind.

9. Vorrichtung nach Anspruch 7, dadurch gekennzeichnet, daß je eine Sensorreihe durch einen Photodioden-Linienscanner mit hoher Verdichtung der photoelektrischen Sensoren gebildet ist.

10. Vorrichtung nach Anspruch 6, dadurch gekennzeichnet, daß zur Erfassung großer Bahnbreiten über die Bahnbreite mehrere Sensorenreihen-Gruppen nebeneinander angeordnet sind, denen jeweils getrennte optische Fokussierungssysteme zugeordnet sind.

11. Vorrichtung nach Anspruch 10, dadurch gekennzeichnet, daß bei nebeneinanderliegenden Sensorenreihen-Gruppen jeweils sich in einem veränderbaren, überlappenden Bereich (47) befindende, einzelne Sensoren zur Erzeugung eines Intensitätsreferenzsignales verwendet sind (Figur 5).

12. Vorrichtung nach Anspruch 6, dadurch gekennzeichnet, daß eine Sensorenreihe (62) eine Referenzmaterialbahn (60) zur Erzeugung eines Referenzsignales er- faßt (Figur 6).

Fig. 1

KT/A1

2/6   0052813

Fig. 2

Fig. 3

Fig. 4a

Fig. 4b

Fig. 4c

Fig. 4d

Fig. 4e

KT/AI

5/6

0052813

Fig.5a

Fig. 5b

Fehler-protok.

Diskriminator-Schaltung

G B

G A

Fig. 6